# EUROPÄISCHE PATENTSCHRIFT

(11) **EP 2 927 526 B1**
(45) Veröffentlichungstag und Bekanntmachung des Hinweises auf die Patenterteilung: **09.01.2019**
(21) Anmeldenummer: 14194885.1
(22) Anmeldetag: 26.11.2014
(51) Int. Cl.: F16D 13/72

(54) **Verbrennungskraftmaschinenseitige Belüftung über Kühlöffnungen inder Dämpfungseinheit**
Combustion engine ventilation using cooling holes in the damping unit
Aération côté moteur à combustion interne par des ouvertures de refroidissement dans l'amortisseur

(30) Priorität: 11.12.2013 DE 102013225544
(43) Veröffentlichungstag der Anmeldung: 07.10.2015
(73) Patentinhaber: Schaeffler Technologies AG & Co. KG, 91074 Herzogenaurach (DE)
(72) Erfinder: Treffeisen, Florian, 76185 Karlsruhe (DE); Vogel, Florian, 77815 Bühl (DE); Schnurr, Florian, 77855 Achern (DE); Grasser, Arnaud, 67620 Soufflenheim (FR); Loktev, Denis, 77815 Bühl (DE)

(56) Entgegenhaltungen:
- EP-A2- 2 600 019
- DE-A1-102010 007 198
- GB-A- 1 366 610
- GB-A- 2 244 788
- US-A- 4 139 085
- US-A- 4 923 043
- US-A1- 2012 080 287

## Beschreibung

Die Erfindung betrifft eine Drehmomentübertragungseinrichtung (auch als Bausatz aus Reibungskupplung und Ausgleichseinheit bezeichenbar) für einen Antriebsstrang eines Kraftfahrzeuges, wie einen Pkw, Lkw, Bus oder landwirtschaftlichen Nutzfahrzeug, zur wahlweisen Drehmomentweiterleitung zwischen einer Antriebswelle einer Verbrennungskraftmaschine (wie Otto- oder Dieselmotor), etwa einer Kurbelwelle, und einer Getriebeeingangswelle eines Getriebes, wobei die Drehmomentübertragungseinrichtung eine Drehschwingungen entgegenwirkende Ausgleichseinheit, etwa ein Einmassenschwungrad oder ein Zweimassenschwungrad, sowie eine Reibungskupplung/ Reibkupplung umfasst, wobei eine Antriebsscheibe der Ausgleichseinheit mit einer Antriebswelle einer Verbrennungskraftmaschine drehfest verbindbar und mit einem Gehäusedeckel der Reibungskupplung drehfest gekoppelt ist, und wobei zumindest ein Kühlfluidumlenkabschnitt vorgesehen ist, der in einem Betriebszustand, in dem sich die Dämpfungseinheit dreht, ein Kühlfluid von der Umgebung der Reibungskupplung in das Innere der Reibungskupplung einbringt. Die Reibungskupplung/ Reibkupplung ist vorzugsweise als Doppelkupplung ausgestaltet.

Aus dem Stand der Technik sind bereits verschiedene Ausführungen von Drehmomentübertragungseinrichtungen bekannt. Bspw. offenbart die DE 10 2010 007 198 A1 ein Doppelkupplungsgetriebe für ein Fahrzeug mit zwei Teilgetrieben und einer mit Eingangswellen dieser Teilgetriebe verbundenen Doppelkupplung mit zwei trockenen Teilkupplungen, und mit zumindest einer Luftfördereinrichtung, die mit der Kupplungsscheibe einer der Kupplungen verbunden oder an dieser ausgeformt ist.

Weiter offenbart bspw. das Dokument mit dem Aktenzeichen DE 10 2012 206 658 A1 eine Doppelkupplung für Kraftfahrzeuge, die in einer Drehmomentübertragungseinrichtung in einem Antriebsstrang eines Fahrzeuges zusammen mit einem Drehschwingungsdämpfer vorgesehen ist, wobei eine Eingangsseite des Drehschwingungsdämpfers mit einer Antriebswelle einer Antriebseinheit und eine Ausgangsseite des Drehschwingungsdämpfers mit einer Mitnahmeeinrichtung der Doppelkupplung verbunden sind, und wobei die Doppelkupplung an einer getriebeseitigen Lagerstelle und an einer motorseitigen Lagerstelle abgestützt ist und wobei ein Kupplungsdeckel der motorseitigen Kupplung der Doppelkupplung mit einem Pilotzapfen verbunden ist, der in einer Pilotzapfenbohrung in der Antriebseinheit über ein Lager radial abgestützt ist.
Eine recht ähnliche Doppelkupplung offenbart die Druckschrift DE 10 2008 019 949 A1.

Darüber hinaus ist in der späteren Druckschrift DE 10 2014 210 409 A1 eine Kupplungskühlvorrichtung zur Kühlung einer Kupplung offenbart, die einen schlauchartigen Körper zur Durchströmung eines Kühlfluidmediums aufweist und an zumindest einem zweiten Endbereich mit Öffnungen ausgebildet ist, zum Auslassen eines Kühlmediums.
Aus der EP 2 600 019 A2 ist weiter eine Doppelkupplung mit einem Zweimassenschwungrad (ZMS) bekannt, bei der das ZMS primärseitig Belüftungsöffnungen aufweist. Die so in die Doppelkupplung eingebrachte Luft kann dann dort mittels eines Lüfterrads verteilt werden.
Ein ähnlicher Aufbau mit Luftdurchtrittsöffnungen, allerdings für eine Einzelkupplung ist außerdem aus der GB 2 244 788 A bekannt.
Diese aus dem Stand der Technik bekannten Ausführungen haben jedoch den Nachteil, dass die Stromstärke des in die Reibungskupplung eingeleiteten Kühlfluids zumindest in manchen Betriebszuständen für eine ausreichende Kühlwirkung nicht ausreichend ist. Die sich im Bereich der Anpressplatten, Zentralplatten/ Druckplatten oder Kupplungsscheiben der Reibungskupplung bildenden Wärmenester können nicht schnell genug beseitigt werden, da die Wärme nicht schnell genug abgeleitet werden kann. Dies liegt insbesondere an der Anordnung der entsprechenden Kühlfluidumlenkabschnitte in der Drehmomentübertragungseinrichtung.
Eine ausreichende Kühlungsfunktion ist jedoch für die Betriebssicherheit der Reibungskupplung essentiell. Die thermische Robustheit einer Reibungskupplung beschränkt nämlich deren Einsatz in verschiedenen Fahrzeugkonzepten und ist, ohne Kühlung, im Wesentlichen durch die Massen der Anpressplatten und Zentralplatten bestimmt, welche Massen nur eine bestimmte Wärmemenge aufnehmen können, bevor die Funktion der Reibungskupplung nicht mehr sichergestellt werden kann.

Es ist daher die Aufgabe der vorliegenden Erfindung, die aus dem Stand der Technik bekannten Nachteile zu beheben und eine ausreichend hohe Kühlwirkung im Betrieb der Drehmomentübertragungseinrichtung zu gewährleisten, wobei die thermische Robustheit der Drehmomentübertragungseinrichtung weiter gesteigert werden soll.

Dies wird erfindungsgemäß durch eine Drehmomentübertragungseinrichtung mit den Merkmalen des Anspruchs 1 gelöst. Dadurch kann von einer der Reibungskupplung abgewandten Seite der Ausgleichseinheit kühles Kühlfluid, wie Luft, aus einem Bereich der Umgebung herangefördert werden, in welchem Bereich das Kühlfluid nicht unmittelbar mit der sich im Betrieb relativ stark aufheizenden Reibungskupplung in Kontakt befindlich war. Dadurch wird die Kühlleistung, der die Kühlfluidumlenkabschnitte aufweisenden Kühleinrichtung deutlich verbessert. Durch die Führung des Kühlfluidstromes in axialer Richtung kann zudem der Kühlfluidstrom auf kürzestem Wege in die Reibungskupplung eingeleitet werden, wodurch die Strömungswiderstände reduziert werden und die Kühlleistung noch weiter gesteigert wird. Auch wird die thermische Robustheit gesteigert, wodurch mehr Anwendungen der Reibungskupplung generiert werden können. Kühlfluidströmungen können nun gezielt in die Reibungskupplung eingeleitet werden, wodurch die Anpressplatten und die Zentralplatte/ Druckplatte der Reibungskupplung durch thermische Konvektion gekühlt werden.
Weitere vorteilhafte Ausführungsformen sind in den Unteransprüchen beansprucht und werden nachfolgend näher erläutert.
Besonders von Vorteil ist es, wenn die Reibungskupplung als trockene Reibungskupplung ausgestaltet ist, wobei dann das Kühlfluid als Luft aus der Umgebung einfach angesaugt werden kann, ohne einen eigenen, geschlossenen Kühlkreislauf zu benötigen. Beispielsweise ist die Reibungskupplung als Doppelkupplung ausgestaltet.
Weiterhin ist es von Vorteil, wenn die zumindest eine erste Kühlöffnung durch ein Durchgangsloch ausgebildet ist, das die Antriebsscheibe in axialer Richtung durchdringt und/ oder die zumindest eine erste Kühlöffnung an ihrem Rand derart ausgestaltet ist, dass sie den zumindest einen Kühlfluidumlenkabschnitt ausbildet, der das Druckfluid im Betriebszustand in axialer Richtung zum Gehäusedeckel hin befördert. Dadurch ist die Druckfluidum/-einleitung besonders effektiv möglich.

In diesem Zusammenhang ist es auch zweckmäßig, wenn die Ausgleichseinheit als Dämpfungseinheit, etwa als Zweimassenschwungrad, ausgebildet ist, wobei die Antriebsscheibe über eine Abtriebsscheibe der Ausgleichseinheit drehfest mit dem Gehäusedeckel gekoppelt/ verbunden ist und die Antriebsscheibe zur Abtriebsscheibe drehschwingungsgedämpft gelagert ist. Dadurch können Drehschwingungen gar gedämpft werden.

Auch ist es von Vorteil, wenn die Abtriebsscheibe zumindest eine zweite Kühlöffnung aufweist, die vorzugsweise als ein zentrisch angeordnetes Durchgangsloch ausgebildet ist und/ oder die zumindest eine zweite Kühlöffnung an die zumindest eine erste Kühlöffnung der Antriebsscheibe in axialer Richtung anschließt. Dadurch wird eine relativ kostengünstige und direkte/ geradlinige Zuführung des Kühlfluides in das Innere der Reibungskupplung ermöglicht.

In diesem Zusammenhang ist es auch von Vorteil, wenn die zumindest eine Kühlöffnung der Antriebsscheibe an ihrem Rand derart ausgestaltet ist, dass sie den zumindest einen Kühlfluidumlenkabschnitt ausbildet, der das Druckfluid im Betriebszustand in axialer Richtung zur Abtriebsscheibe hin befördert/ leitet. Dadurch ist es möglich, die Kühlfluidumlenkabschnitte unmittelbar in die Antriebsscheibe zu integrieren. Beispielsweise ist es in diesem Zusammenhang möglich, den Rand anzufasen. Auch kann die Kühlöffnung als eine schräg verlaufende Bohrung ausgestaltet sein, wodurch das Kühlfluid unmittelbar in axialer Richtung umgelenkt wird.

Weiterhin ist es von Vorteil, wenn die zumindest eine Kühlöffnung der Abtriebsscheibe an die zumindest eine Kühlöffnung der Antriebsscheibe (in axialer Richtung) anschließt. Dadurch wird die Kühlfluidumleitung weiter verbessert.

Ist das Kühlfluid durch eine zentrische Einlassbohrung im Gehäusedeckel in das Innere der Reibungskupplung einleitbar, kann das Kühlfluid nach Eintreten in die Reibungskupplung in radialer Richtung nach außen, entlang des gesamten Umfangs, verteilt werden und somit möglichst alle Bereiche der Anpressplatte und der Zentralplatte/ Druckplatte umströmt werden. Dadurch wird ein besonders effizienter Kühlfluidstrom in der Reibungskupplung erzeugt, der an der Anpressplatte und der Zentralplatte/ Druckplatte vorbei strömt und diese durch Konvektion abkühlt.

Im Strömungsweg des Kühlfluids ist ein mehrere Umlenkschaufeln aufweisendes Lüfterrad angeordnet, so kann der Kühlfluidstrom besonders gezielt umgeleitet werden, um die Anpressplatte gleichmäßig zu umströmen. Die Kühlleistung wird dadurch nochmals gesteigert.

Weiterhin ist das Lüfterrad mit einer ein Betätigungslager der Reibungskupplung betätigenden, zentral angeordneten Betätigungsstange fest verbunden, wobei sich der Gehäusedeckel dann im Betriebszustand gegenüber der Betätigungsstange dreht. Dadurch kommt es zu einer aktiven Umlenkung durch das Lüfterrad, wodurch die Kühlleistung nochmals gesteigert werden kann.

Weist der zumindest eine Kühlfluidumlenkabschnitt eine getrennt von der Antriebsscheibe ausgebildete Umlenkkappe auf, die das Kühlfluid umleitet, so ist eine spezielle Schaufelgeometrie des Kühlfluidumlenkabschnittes hinsichtlich ihrer Förder-/ Umleiteigenschaften noch effektiver ausgestaltet und besonders kostengünstig herzustellen, da diese Umlenkkappe getrennt hergestellt werden kann und einfach drehfest im Betrieb in die Antriebsscheibe eingerastet/ eingepresst werden kann.

Von Vorteil ist es weiterhin, wenn der zumindest eine Kühlfluidumlenkabschnitt derart ausgestaltet und angeordnet ist, dass das Kühlfluid zwischen einer Rückwand einer Verbrennungskraftmaschine und einem Spacer der Verbrennungskraftmaschine vorbeileitbar ist. Dadurch kann das Kühlfluid aus einem besonders kühlen Umgebungsbereich der Verbrennungskraftmaschine zugeführt werden.

In anderen Worten ausgedrückt, betrifft die Erfindung eine Drehmomentübertragungseinheit, die besonders zur Kühlung einer als Doppelkupplung ausgestalteten Reibungskupplung dient. Hier werden die als Löcher ausgebildeten Kühlöffnungen in der als Zweimassenschwungrad ausgestalteten Ausgleichseinheit/ Dämpfungseinheit zum Eintritt des Kühlfluids, vorzugsweise Luft, in die Doppelkupplung angeordnet. Diese Löcher können dabei mittels Fasen und/ oder Deckel das Ansaugen der Luft noch unterstützen. Innerhalb der Doppelkupplung kann die Luft per Zentrifugalkraft radial verteilt werden oder es können als Lüfterräder ausgebildete Förderelemente/ Schaufelräder vorhanden sein. Das Schaufelrad kann auf dem Außenring/ Lageraußenring eines Betätigungslagers (mitdrehend) oder auf einem Innenring/ Lagerinnenring des Betätigungslagers (stillstehend) bereitgestellt sein. Alternativ dazu ist auch ein aktiv angetriebenes Schaufelrad denkbar.
Die Erfindung wird nun nachfolgend anhand von Zeichnungen näher erläutert, wobei verschiedene Ausführungsformen näher dargestellt sind.
Es zeigen:

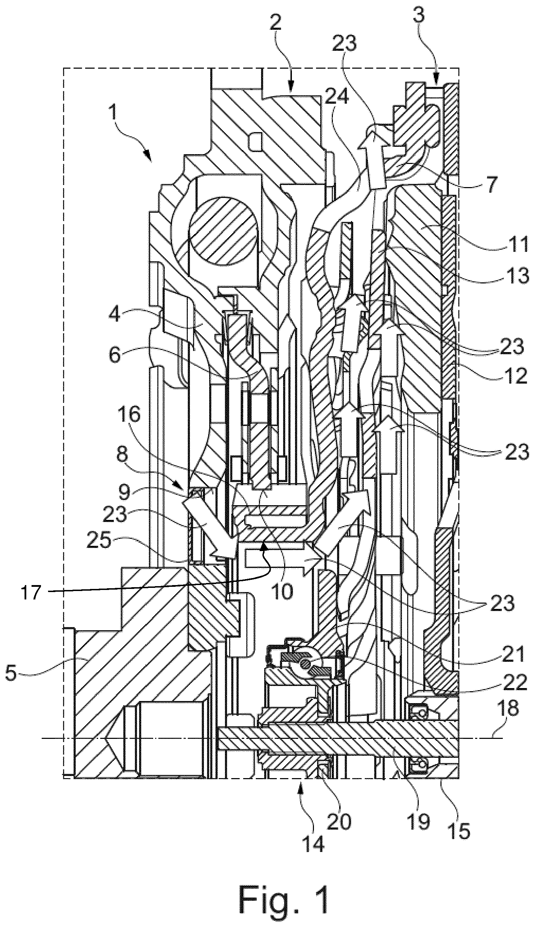

Fig. 1 eine Längsschnittdarstellung durch eine Drehmomentübertragungseinrichtung nach einer ersten nicht-erfindungsgemäßen Ausführungsform, wobei der Schnitt entlang der Drehachse der Drehmomentübertragungseinrichtung durchgeführt ist und der Strömungsweg des Kühlfluids in einem Betriebszustand durch die Ausgleichseinheit sowie die Reibungskupplung veranschaulicht ist, und wobei nach Durchschreiten der Ausgleichseinheit in axialer Richtung eine passive Verteilung des Kühlfluides in radialer Richtung innerhalb der Reibungskupplung stattfindet,

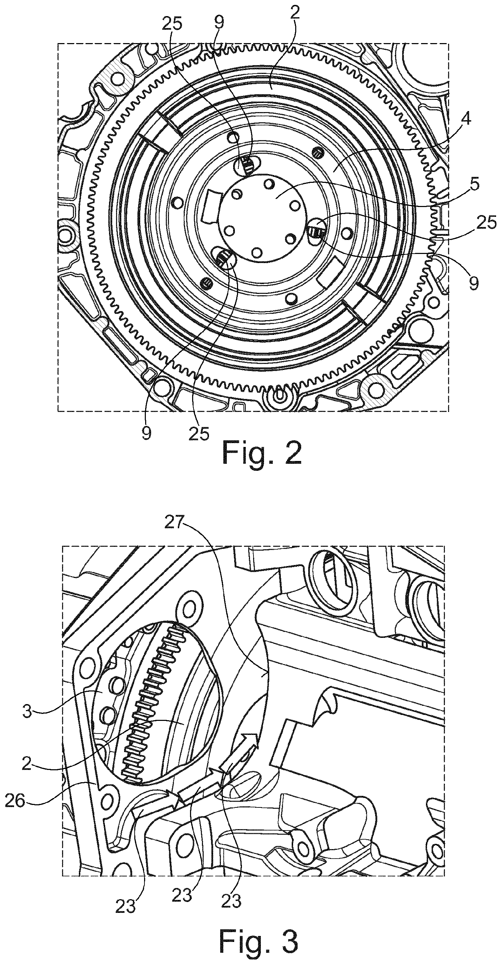

Fig. 2 eine Vorderansicht der Drehmomentübertragungseinrichtung nach der ersten Ausführungsform nach Fig. 1, wobei eine der Reibungskupplung abgewandte Seite der Ausgleichseinheit dargestellt ist und insbesondere die Anordnung der Kühlöffnungen in der Antriebsscheibe der Ausgleichseinheit veranschaulicht ist,
Fig. 3 eine isometrische Darstellung der Umgebung der Drehmomentübertragungseinrichtung in einem eingebauten Zustand, wobei die Drehmomentübertragungseinrichtung im Bereich zwischen der Verbrennungskraftmaschine und einem Getriebe eingebaut ist und insbesondere der Verlauf des Kühlfluidstroms außerhalb der Drehmomentübertragungseinrichtung, zwischen einer Rückwand der Verbrennungskraftmaschine und einem Spacer der Verbrennungskraftmaschine, zur Ausgleichseinheit hin, dargestellt ist,

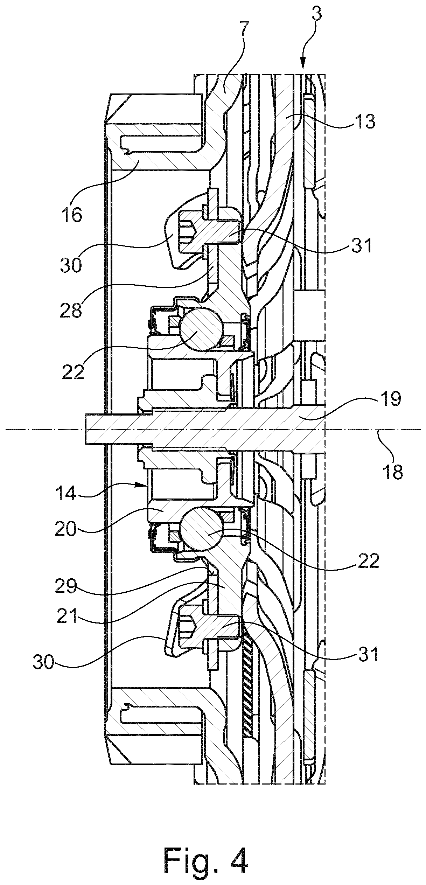

Fig. 4 eine detaillierte Längsschnittdarstellung durch eine Drehmomentübertragungseinrichtung nach einer weiteren, zweiten nichterfindungsgemäßen Ausführungsform, wobei der Schnitt wiederum entlang der Drehachse der Drehmomentübertragungseinrichtung durchgeführt ist und der Bereich der Reibungskupplung um die Einlassöffnung des Gehäusedeckels herum dargestellt ist, und ein drehfest mit einem Lageraußenring eines Betätigungslagers der Reibungskupplung verbundenes Lüfterrad dargestellt ist,

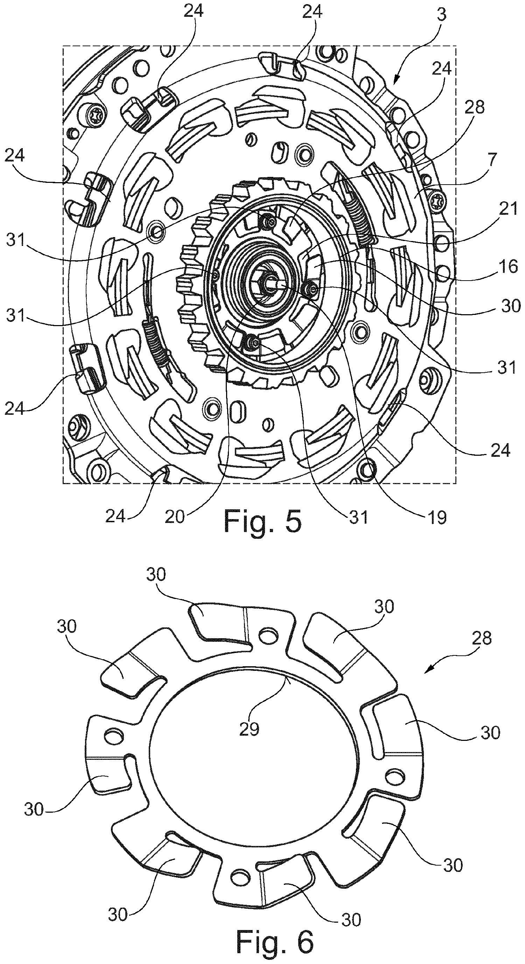

Fig. 5 eine isometrische Darstellung der in die Drehmomentübertragungseinrichtung nach Fig. 4 eingesetzten Reibungskupplung, wobei insbesondere die Anordnung des Lüfterrades gut zu erkennen ist,
Fig. 6 eine isometrische Darstellung des in dem Ausführungsbeispiel nach Fig. 4 und 5 eingesetzten Lüfterrades,

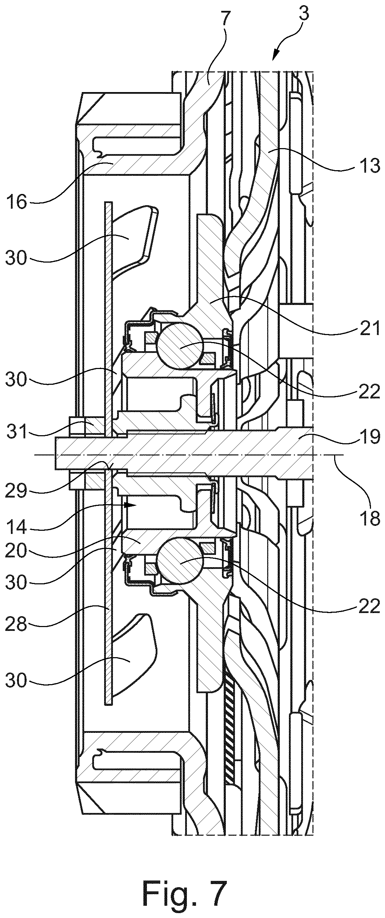

Fig. 7 eine detaillierte Längsschnittdarstellung durch eine erfindungsgemäße Drehmomentübertragungseinrichtung nach einer ersten erfindungsgemäßen Ausführungsform, wobei der Schnitt wiederum entlang der Drehachse der Drehmomentübertragungseinrichtung durchgeführt ist und der Bereich der Reibungskupplung um die Einlassöffnung des Gehäusedeckels herum dargestellt ist, und das Lüfterrad nun fest mit einer das Betätigungslager betätigenden Betätigungsstange der Reibungskupplung verbunden ist,

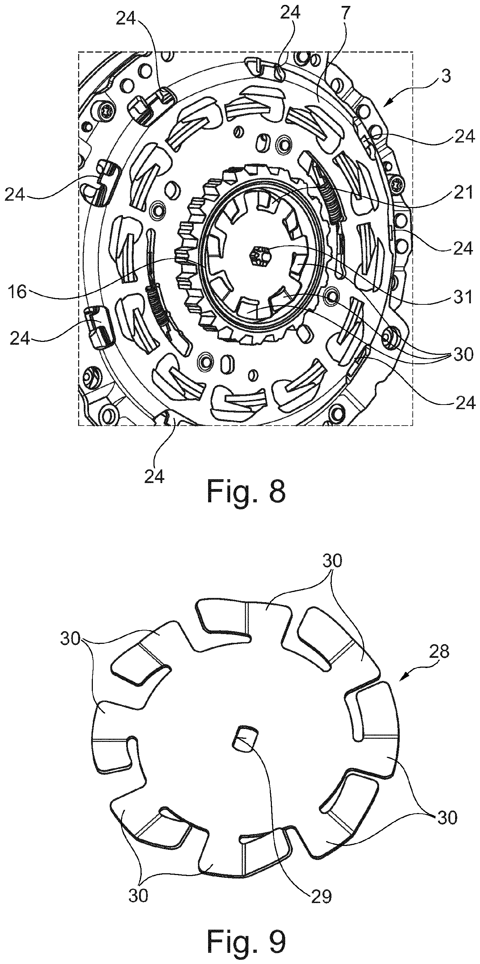

Fig. 8 eine isometrische Darstellung der in die Drehmomentübertragungseinrichtung nach Fig. 7 eingesetzten Reibungskupplung, wobei insbesondere die Anordnung des Lüfterrades gut zu erkennen ist,
Fig. 9 eine isometrische Darstellung des in dem Ausführungsbeispiel nach Fig. 7 und 8 eingesetzten Lüfterrades.
Die Figuren sind lediglich schematischer Natur und dienen ausschließlich dem Verständnis der Erfindung. Die gleichen Elemente sind mit denselben Bezugszeichen versehen.

In der Fig. 1 ist zunächst eine erste nicht-erfindungsgemäße Ausführungsform einer Drehmomentübertragungseinrichtung 1 veranschaulicht. Die Drehmomentübertragungseinrichtung 1, die einen Bausatz aus Ausgleichseinheit 2 und einer Reibungskupplung 3 darstellt, ist für einen Antriebsstrang eines Kraftfahrzeuges, etwa einem Pkw, Lkw, Bus oder landwirtschaftlichen Nutzfahrzeug vorgesehen, wobei die Ausgleichseinheit 2 Drehschwingungen entgegenwirkt. Die Ausgleichseinheit 2 ist hier als eine als Zweimassenschwungrad ausgebildete Dämpfungseinheit 2 ausgestaltet, welche die die während des Betriebes der Verbrennungskraftmaschine entstehenden Drehschwingungen dämpft. Alternativ zu der Ausführung als Zweimassenschwungrad, kann die Ausgleichseinheit 2 aber auch als ein Einmassenschwungrad ausgebildet sein. Die Ausgleichseinheit 2, nachfolgend auch als Dämpfungseinheit 2 bezeichnet, umfasst eine Antriebsscheibe 4, die mit einer Antriebswelle 5, etwa einer Kurbelwelle einer hier nicht weiter dargestellten Verbrennungskraftmaschine, vorzugsweise einem Diesel- oder Ottomotor, drehfest verbindbar ist (und im Betriebszustand auch drehfest verbunden ist), und eine relativ zu der Antriebsscheibe 4 gedämpft gelagerte, mit der Antriebsscheibe drehfest verbundene Abtriebsscheibe 6.

Da die Dämpfungseinheit 2 als Zweimassenschwungrad ausgestaltet ist, ist die Antriebsscheibe 4 relativ zur Abtriebsscheibe 6 entlang des Umfangs der Dämpfungseinheit 2 / des Zweimassenschwungrades federgedämpft. Die Abtriebsscheibe 6 ist weiterhin mit einem Gehäusedeckel 7 der Reibungskupplung 3 drehfest verbunden. Zumindest ein Kühlfluidumlenkabschnitt 8 ist vorgesehen, der in einem Betriebszustand, in welchem sich die Dämpfungseinheit 2 dreht, ein Kühlfluid von der Umgebung der Reibungskupplung 3 in das Innere der Reibungskupplung 3 einleitet. Die Antriebsscheibe 4 und die Abtriebsscheibe 6 weisen jeweils zumindest eine Kühlöffnung 9, 10 auf, die so zueinander angeordnet sind, dass ein Kühlfluidstrom im Betriebszustand in axialer Richtung, durch die Dämpfungseinheit 2 und den Gehäusedeckel 7 hindurch, in das Innere der Reibungskupplung 3 einleitbar ist.

Der weitere Aufbau der Reibungskupplung 3, die als Doppelkupplung ausgestaltet ist, ist in Fig. 1 besonders gut zu erkennen. Die Reibungskupplung 3 ist als trockene Reibungskupplung 3 ausgestaltet. Die Reibungskupplung 3 umfasst zwei Teilkupplungen, wobei hier, der Übersichtlichkeit halber, lediglich eine erste Teilkupplung dargestellt ist. Die erste Teilkupplung umfasst eine erste Anpressplatte, nachfolgend als Anpressplatte 11 bezeichnet, eine erste Kupplungsscheibe, nachfolgend als Kupplungsscheibe 12 bezeichnet, sowie eine die Anpressplatte 11 kontaktierende, erste Tellerfeder, nachfolgend als Tellerfeder 13 bezeichnet. Auch ist weiterhin eine Druckplatte vorgesehen, die als Zentralplatte der Reibungskupplung 3 ausgestaltet ist, der Übersichtlichkeit halber jedoch ebenfalls nicht dargestellt ist. Zudem ist dieser ersten Teilkupplung ein Betätigungslager 14, das hier als Ausrücklager ausgestaltet ist, zugeteilt.

Das im Betriebszustand der Drehmomentübertragungseinrichtung 1 von der Antriebswelle 5 auf die Dämpfungseinheit 2 und von dieser auf den Gehäusedeckel 7 übertragene Drehmoment, wird je nach Kupplungsstellung der Reibungskupplung 3/ der Doppelkupplung, d.h. je nach Stellung der Anpressplatte 11, an eine Getriebeeingangswelle 15, welche eine erste Getriebeeingangswelle eines Getriebes ist, weitergeleitet. Zum Verbinden und Öffnen der ersten Teilkupplung der Reibungskupplung 3 (Auskuppeln und Einkuppeln) wird die Anpressplatte 11 auf übliche Weise zwischen zwei Kupplungsstellungen hin und her bewegt. In einer ersten Kupplungsstellung wird die Anpressplatte 11 mittels der Tellerfeder 13 gegen die Kupplungsscheibe 12 und die wiederum gegen die Druckplatte gedrückt, so dass es zu einer drehfesten Verbindung der Druckplatte zu der Anpressplatte 11 mit der Kupplungsscheibe 12 kommt und ein Drehmoment von dem Gehäusedeckel 7 / der Druckplatte auf die Getriebeeingangswelle 15 übertragen wird. Zum Ausrücken der Kupplung 3, d.h. dem Bewegen in eine zweite Kupplungsstellung, wird die Anpressplatte 11 wird die Tellerfeder 13 über das Ausrücklager 14 verkippt, wodurch die Anpressplatte 11 sowie die Druckplatte außer Kontakt mit der Kupplungsscheibe 12 geraten und der Drehmomentfluss/ Kraftfluss unterbrochen wird. Eine hier nicht weiter dargestellte, zweite Teilkupplung ist wiederum wie die erste Teilkupplung aufgebaut und zusammen mit der Druckplatte/ Zentralplatte und dem Gehäusedeckel 7 funktionierend, zur Ausbildung einer Doppelkupplung.

Zur drehfesten Verbindung der Dämpfungseinheit 2 mit dem Gehäusedeckel 7 ist in der Abtriebsscheibe 6 die Kühlöffnung 10, nachfolgend als zweite Kühlöffnung 10 bezeichnet, der Abtriebsscheibe 6 vorgesehen. Die zweite Kühlöffnung 10 ist durch ein zentrisch (relativ zur Drehachse 18) ausgerichtetes Durchgangsloch gebildet, an dessen Innenumfangsfläche eine Verzahnungskontur vorgesehen ist, welche Verzahnungskontur auf eine Außenverzahnung des Gehäusedeckels 7 aufschiebbar ist, um den Gehäusedeckel 7 formschlüssig mit der Abtriebsscheibe 6 zu verbinden.

Die die Außenverzahnung aufweisende Außenumfangsfläche des Gehäusedeckels 7 ist wiederum auf einem ringförmigen Abschnitt 16 des Gehäusedeckels 7 angeordnet. Der ringförmige Abschnitt 16 ist deshalb als ein Mitnehmerzahnkranz ausgebildet. Der ringförmige Abschnitt 16 des Gehäusedeckels 7 bildet mit seiner Innenumfangsfläche wiederum eine Einlassöffnung 17 aus, welche Einlassöffnung 17 durch ein Durchgangsloch ausgestaltet ist. Die Einlassöffnung 17 weist einen kreisrunden Querschnitt auf und ist konzentrisch zur Drehachse 18 der Drehmomentübertragungseinrichtung 1 angeordnet. Auch ist die Einlassöffnung 17 konzentrisch zu der zweiten Kühlöffnung 10 angeordnet und im Betriebszustand in radialer Richtung innerhalb der zweiten Kühlöffnung 10 angeordnet. Von dem ringförmigen Abschnitt 16 aus erstreckt sich der Gehäusedeckel 7 im Wesentlichen in radialer Richtung nach außen. An einem radial äußeren Ende des Gehäusedeckels 7, welches Ende sich radial weiter außen als der ringförmige Abschnitt 16 befindet, ist der Gehäusedeckel 7 drehfest mit einer hier der Übersichtlichkeit halber nicht weiter dargestellten Druckplatte/ Zentralplatte der Reibungskupplung 3 verbunden. Die Druckplatte rotiert somit zusammen mit dem Gehäusedeckel 7 während des Betriebes der Verbrennungskraftmaschine.

Das als Ausrücklager ausgestaltete Betätigungslager 14 umfasst einen koaxial zur Drehachse 18 angeordneten Betätigungsstößel / eine Betätigungsstange 19, die in axialer Richtung verschiebbar ist und verschiebefest mit einem Lagerinnenring 20 verbunden ist. Ein Lageraußenring 21 des Betätigungslagers 14 ist über eine Wälzlagerung mittels mehrerer Wälzkörper 22 relativ zu dem Lagerinnenring 20 verdrehbar gelagert.

Wie weiterhin in Fig. 1 gut zu erkennen ist, ist die in der Antriebsscheibe 4 angeordnete, erste Kühlöffnung 9, nachfolgend als erste Kühlöffnung 9 bezeichnet, in einem radialen Bereich derart zu der zweiten Kühlöffnung 10 sowie der Einlassöffnung 17 positioniert, dass diese in axialer Richtung, auf gleicher radialer Höhe liegend, aneinander anschließen.

In Fig. 2 sind wiederum mehrere in der Antriebsscheibe 4 eingebrachte erste Kühlöffnungen 9 zu erkennen. Die ersten Kühlöffnungen 9, die als Durchgangslöcher, wie Durchgangsbohrungen, ausgeformt sind, sind hinsichtlich der Einleitung des Kühlfluids geometrisch optimiert und bilden selbst jeweils einen Kühlfluidumlenkabschnitt 8 aus. Wie in Fig. 2 gut zu erkennen ist, weist die Antriebsscheibe 4 drei erste Kühlöffnungen 9 auf, die entlang des Umfangs gleichmäßig voneinander beabstandet sind und auf einer gleichen radialen Höhe angeordnet sind. Zur Ausbildung des Kühlfluidumlenkabschnittes 8 ist jede der ersten Kühlöffnungen 9 auf einer ersten Seite entlang des Umfangs angefast, wohingegen auf einer, dieser ersten Seite abgewandten, zweiten Seite eine Umlenkkappe 25 in die erste Kühlöffnung 9 eingeschoben ist und formschlüssig gehalten ist. Diese Umlenkkappe 25 ist als ein von der Antriebsscheibe 4 getrenntes Bauteil ausgestaltet und in der Antriebsscheibe 4 etwa eingepresst oder eingerastet. Die Umlenkkappe 25 weist im Wesentlichen die Form eines halbierten/ geteilten Topfes auf, wobei der Bodenbereich im Wesentlichen bündig zu der der Reibungskupplung 3 abgewandten Seitewand der Antriebsscheibe 4 angeordnet ist. Der an den Bodenbereich anschließende Seitenwandbereich der Umlenkkappe 25 liegt an der zweiten Seite der ersten Kühlöffnung 9 an. Somit wird durch den Bodenbereich eine Art Schaufelgeometrie gebildet, die das Kühlfluid im Betriebszustand in axialer Richtung der Reibungskupplung 3 umlenkt.
Wie weiterhin in Verbindung mit den Fig. 1 und 3 besonders gut zu erkennen ist, wird das während des Betriebes der Drehmomentübertragungseinrichtung 1 einzuleitende Kühlfluid (vorzugsweise Luft, da Reibungskupplung 3 als trocken laufende Reibungskupplung ausgestaltet) von außerhalb der Drehmomentübertragungseinrichtung 1 in das Innere der Reibungskupplung 3 eingebracht. Der Kühlfluidstrom ist jeweils durch die Richtungspfeile mit dem Bezugszeichen 23 veranschaulicht. Diese Richtungspfeilen 23 spiegeln somit den Strömungsweg des Kühlfluids im Betrieb, d.h. bei drehender Dämpfungseinheit 2 sowie Antriebswelle 5, wider. Der Kühlfluidstrom wird zunächst, vor Eintreten durch die ersten Kühlöffnungen 9 zwischen einem Spacer 26 und einer Rückwand 27 der Verbrennungskraftmaschine in radialer Richtung zu den ersten Kühlöffnungen 9 hin befördert.
Zu einem Eintreten des Kühlfluids seitens der Antriebsscheibe 4, d.h. auf einer der Reibungskupplung 3 abgewandten Seite der Dämpfungseinheit 2, kommt es durch die Beschaffenheit der ersten Kühlöffnungen 9 in axialer Richtung (bezogen auf Drehachse 18) der Reibungskupplung 3. Nach Eintreten in den Innenraum (d.h. jenen Raum, der von dem Gehäusedeckel 7 umhüllt ist) der Reibungskupplung 3 wird das Kühlfluid durch die wirkende Zentrifugalkraft in radialer Richtung nach außen befördert. Die Luft umströmt anschließend in einem radial äußeren Bereich die Anpressplatte 11 und tritt wiederum nochmals radial weiter außen durch Auslassöffnungen 24 aus dem Gehäusedeckel 7 aus.

In Fig. 4 ist ein weiterhin nicht-erfindungsgemäßes Ausführungsbeispiel einer Drehmomentübertragungseinrichtung 1 offenbart. Der Übersichtlichkeit halber ist hierbei lediglich der Bereich des Betätigungslagers 14 der Reibungskupplung 3 dargestellt. Die Reibungskupplung 3 sowie die Dämpfungseinheit 2 sind wie die des ersten Ausführungsbeispieles aufgebaut und funktionierend. Im Gegensatz zu der in Fig. 1 dargestellten ersten Ausführungsform, ist an dem Lageraußenring 21 des Betätigungslagers 14 in der zweiten Ausführungsform ein zusätzliches Lüfterrad 28 als Förderungselement/ Schaufelrad vorgesehen. Der nähere Aufbau des Lüfterrades 28 ist dann auch im Zusammenhang mit den Fig. 5 und 6 zu erkennen. Das Lüfterrad 28 ist im Wesentlichen scheibenförmig ausgestaltet und weist ein zentrales, durchgehendes Innenloch 29 auf, das als Durchgangsbohrung ausgestaltet ist. An einer radialen Außenumfangsfläche des Lüfterrades 28 sind mehrere Umlenkschaufeln 30 angebracht, die sich zum einen in radialer Richtung nach außen erstrecken, und einen Flügelbereich aufweisen, der sich auch in axialer Richtung erstreckt, wodurch bei Drehung des Lüfterrades 28 ein Ventilator gebildet ist. Entlang des Umfangs des Lüfterrades 28 sind acht Umlenkschaufeln 30 verteilt angeordnet. Dadurch wird Kühlfluid in axialer Richtung beschleunigt und weitergeleitet. Zur Befestigung des Lüfterrades 28 sind Befestigungsmittel 31 vorgesehen. Die als Schrauben ausgeführten Befestigungsmittel 31 verbinden das Lüfterrad 28 drehfest mit dem Lageraußenring 21 des Betätigungslagers 14.

In Bezug auf das Lüfterrad 28 zeigen die Fig. 7 bis 9 eine erfindungsgemäße Ausführungsform, die im Grunde ebenfalls wie die erste Ausführungsform ausgestaltet ist. Hierbei ist das Lüfterrad 28 im Wesentlichen wie das Lüfterrad 28 ausgestaltet, weist jedoch zentrisch ein Innenloch 29 auf, das eine von einer kreisrunden Erstreckung abweichende Geometrie aufweist und auf ein entsprechend gegensinnig ausgeformtes Ende der Betätigungsstange 19 aufsteckbar ist, so dass das Lüfterrad 28 formschlüssig mit der Betätigungsstange 19 verbunden ist. Im Gegensatz zu der zweiten Ausführungsform nach den Fig. 4 bis 6 erstrecken sich die Flügel der Umlenkschaufeln 30 jedoch nicht in axialer Richtung von der Reibungskupplung 9 weg, sondern zur Reibungskupplung 9 hin. Dadurch wird wiederum ein Umlenken des Kühlfluidstroms bewirkt. Zur Befestigung des Lüfterrades 28 dient wiederum ein Befestigungsmittel 31, das zentrisch auf der Betätigungsstange 19 aufgeschraubt wird, um das Lüfterrad 28 drehfest und verschiebefest mit der Betätigungsstange 19 zu verbinden.

In anderen Worten ausgedrückt, wird durch die Drehmomentübertragungseinrichtung 1 ein Luftstrom an der Motorrückwand/ Rückwand 27 und am Spacer 26 vorbei durch die Dämpfungseinheit 2/ das Zweimassenschwungrad (ZMS) in Richtung der ersten Teilkupplung der Kupplung/ Reibungskupplung 3 geleitet. Hierzu wird der Spacer 26 leicht bearbeitet, um den Luftstrom zu ermöglichen. Ein Leitblech/ Lüfterrad 28 kann verwendet werden, um die Luft gezielter an das ZMS zu bringen. In einem ZMS werden mehrere Löcher (erste Kühlöffnungen 9) gebohrt. Diese werden einseitig angefast wodurch sich ein zusätzlicher Ansaugeffekt einstellt (vgl. Tragflächen-Prinzip bei Flugzeugflügel). Die Löcher (erste Kühlöffnungen 9) können noch mit einer Kappe / Umlenkkappe 25 teilweise abgeschlossen werden, was die Luftleitung verbessert (vgl. Schaufel-Prinzip). Alternativ können die Löcher (erste Kühlöffnungen 9) auch schräg eingebohrt werden, wodurch das Anfasen sowie der Einsatz einer Kappe entfallen würden.

Die Luftleitung soll so gestaltet werden, dass kühle Luft von außen in das Drehzentrum der Reibungskupplung 3 gelangt und dann über Fliehkraft nach außen getragen wird. Die Leitung des Luftstroms hinter dem ZMS kann auf drei verschiedenen Arten erfolgen: Variante 1 (nicht-erfindungsgemäß): Innerhalb der Kupplung 3 wird auf weitere Elemente, die den Luftstrom leiten, verzichtet. Der Luftstrom fließt in die Kupplung 3 und strömt hier an der Anpressplatte 11 vorbei. Variante 2 (nicht-erfindungsgemäß): Am Ausrücklager / Betätigungslager 14 der ersten Teilkupplung wird ein Lüfterrad 28 befestigt, wodurch der Luftstrom in Richtung Kupplungsmitte geführt werden soll. Das Lüfterrad 28 befindet sich auf dem Außenring/ Lageraußenring 21 des Ausrücklagers 14, wodurch es sich mit der Kupplung 3 mitdreht. Der Luftstrom fließt in die Kupplung 3 und strömt hier an der Anpressplatte 11 vorbei. Variante 3 (erfindungsgemäß): Am Ausrücklager/ Betätigungslager 14 der ersten Teilkupplung wird ein Lüfterrad 28 befestigt, wodurch der Luftstrom in Richtung Kupplungsmitte geführt werden soll. Das Lüfterrad 28 befindet sich an der Zugstange/ Betätigungsstange 19, wodurch es fest in der Kupplungsglocke steht. Dadurch entsteht eine Differenzdrehzahl zur mitdrehenden Kupplung 3. Der Luftstrom fließt in die Kupplung 3 und strömt hier an der Anpressplatte 11 vorbei.

### Bezugszeichenliste

- 1: Drehmomentübertragungseinrichtung
- 2: Dämpfungseinheit
- 3: Reibungskupplung
- 4: Antriebsscheibe
- 5: Antriebswelle
- 6: Abtriebsscheibe
- 7: Gehäusedeckel
- 8: Kühlfluidumlenkabschnitt
- 9: erste Kühlöffnung
- 10: zweite Kühlöffnung
- 11: Anpressplatte
- 12: Kupplungsscheibe
- 13: Tellerfeder
- 14: Betätigungslager
- 15: Getriebeeingangswelle
- 16: ringförmiger Abschnitt
- 17: Einlassöffnung
- 18: Drehachse
- 19: Betätigungsstange
- 20: Lagerinnenring
- 21: Lageraußenring
- 22: Wälzkörper
- 23: Richtungspfeil
- 24: Auslassöffnung
- 25: Umlenkkappe
- 26: Spacer
- 27: Rückwand
- 28: Lüfterrad
- 29: Innenbohrung
- 30: Umlenkschaufel
- 31: Befestigungsmittel

## Patentansprüche

1. Drehmomentübertragungseinrichtung (1) für einen Antriebsstrang eines Kraftfahrzeuges, mit einer Drehschwingungen entgegenwirkenden Ausgleichseinheit (2) sowie einer Reibungskupplung (3), wobei eine Antriebsscheibe (4) der Ausgleichseinheit (2) mit einer Antriebswelle (5) einer Verbrennungskraftmaschine drehfest verbindbar und mit einem Gehäusedeckel (7) der Reibungskupplung (3) drehfest gekoppelt ist, und wobei zumindest ein Kühlfluidumlenkabschnitt (8) vorgesehen ist, der in einem Betriebszustand, in dem sich die Ausgleichseinheit (2) in Gestalt einer Dämpfungseinheit dreht, ein Kühlfluid von der Umgebung der Reibungskupplung (3) in das Innere der Reibungskupplung (3) einbringt, wobei die Antriebsscheibe (4) zumindest eine, einen Kühlfluidumlenkabschnitt ausbildende, erste Kühlöffnung (9) aufweist, wobei diese zumindest eine erste Kühlöffnung (9) so angeordnet und ausgebildet ist, dass ein Kühlfluidstrom in dem Betriebszustand in axialer Richtung, durch die Ausgleichseinheit (2) und den Gehäusedeckel (7) hindurch, in das Innere der Reibungskupplung (3) einleitbar ist, und wobei im Strömungsweg des Kühlfluids ein mehrere Umlenkschaufeln (30) aufweisendes Lüfterrad (28) angeordnet ist, **dadurch gekennzeichnet, dass** das Lüfterrad (28) mit einer ein Betätigungslager (14) der Reibungskupplung (3) betätigenden, zentral angeordneten Betätigungsstange (19) fest verbunden ist, wobei sich der Gehäusedeckel (7) im Betriebszustand gegenüber der Betätigungsstange (19) dreht.

2. Drehmomentübertragungseinrichtung (1) nach Anspruch 1, **dadurch gekennzeichnet, dass** die zumindest eine erste Kühlöffnung (9) durch ein Durchgangsloch ausgebildet ist, das die Antriebsscheibe (4) in axialer Richtung durchdringt und/ oder die zumindest eine erste Kühlöffnung (9) an ihrem Rand derart ausgestaltet ist, dass sie den zumindest einen Kühlfluidumlenkabschnitt (8) ausbildet, der das Druckfluid im Betriebszustand in axialer Richtung zum Gehäusedeckel (7) hin befördert.

3. Drehmomentübertragungseinrichtung (1) nach einem der Ansprüche 1 und 2, **dadurch gekennzeichnet, dass** die Ausgleichseinheit (2) als Dämpfungseinheit, etwa als Zweimassenschwungrad, ausgebildet ist, wobei die Antriebsscheibe (4) über eine Abtriebsscheibe (6) der Ausgleichseinheit (2) drehfest mit dem Gehäusedeckel (7) gekoppelt ist und die Antriebsscheibe (4) zur Abtriebsscheibe (6) drehschwingungsgedämpft gelagert ist.

4. Drehmomentübertragungseinrichtung (1) nach Anspruch 3, **dadurch gekennzeichnet, dass** die Abtriebsscheibe (6) zumindest eine zweite Kühlöffnung (10) aufweist, die vorzugsweise als ein zentrisch angeordnetes Durchgangsloch ausgebildet ist und/ oder die zumindest eine zweite Kühlöffnung (10) an die zumindest eine erste Kühlöffnung (9) der Antriebsscheibe (4) in axialer Richtung anschließt.

5. Drehmomentübertragungseinrichtung (1) nach einem der Ansprüche 1 bis 4, **dadurch gekennzeichnet, dass** das Kühlfluid durch eine zentrische Einlassöffnung (17) im Gehäusedeckel (7) in das Innere der Reibungskupplung (3) einleitbar ist.

6. Drehmomentübertragungseinrichtung (1) nach einem der Ansprüche 1 bis 5, **dadurch gekennzeichnet, dass** der zumindest eine Kühlfluidumlenkabschnitt (8) eine getrennt von der Antriebsscheibe (4) ausgebildete Umlenkkappe (25) aufweist, die das Kühlfluid umleitet.

7. Drehmomentübertragungseinrichtung (1) nach einem der Ansprüche 1 bis 6, **dadurch gekennzeichnet, dass** der zumindest eine Kühlfluidumlenkabschnitt (8) derart ausgestaltet und angeordnet ist, dass das Kühlfluid zwischen einer Rückwand (27) einer Verbrennungskraftmaschine und einem Spacer (26) der Verbrennungskraftmaschine vorbeileitbar ist.

## Claims

1. Torque transmission device (1) for a drive train of a motor vehicle, having a compensation unit (2) which counteracts torsional vibrations, and a friction clutch (3), it being possible for a drive disc (4) of the compensation unit (2) to be connected fixedly to a drive shaft (5) of an internal combustion engine so as to rotate with it, and being coupled fixedly to a housing cover (7) of the friction clutch (3) so as to rotate with it, and at least one cooling fluid deflecting section (8) being provided which, in an operating state in which the compensation unit (2) rotates in the form of a damping unit, introduces a cooling fluid from the surroundings of the friction clutch (3) into the interior of the friction clutch (3), the drive disc (4) having at least one first cooling opening (9) which configures a cooling fluid deflecting section, the said at least one first cooling opening (9) being arranged and configured in such a way that, in the operating state, a cooling fluid flow can be introduced in the axial direction, through the compensation unit (2) and the housing cover (7), into the interior of the friction clutch (3), and an impeller wheel (28) which has a plurality of deflecting blades (30) being arranged in the flow path of the cooling fluid, **characterized in that** the impeller wheel (28) is connected fixedly to a centrally arranged actuating rod (19) which actuates an actuating bearing (14) of the friction clutch (3), the housing cover (7) rotating with respect to the actuating rod (19) in the operating state.

2. Torque transmission device (1) according to Claim 1, **characterized in that** the at least one first cooling opening (9) is configured by way of a through hole which penetrates the drive disc (4) in the axial direction and/or the at least one first cooling opening (9) is configured at its edge in such a way that it configures the at least one cooling fluid deflecting section (8) which conveys the pressure fluid in the axial direction towards the housing cover (7) in the operating state.

3. Torque transmission device (1) according to either of Claims 1 and 2, **characterized in that** the compensation unit (2) is configured as a damping unit, for instance as a dual-mass flywheel, the drive disc (4) being coupled fixedly to the housing cover (7) so as to rotate with it via an output disc (6) of the compensation unit (2), and the drive disc (4) being mounted in a manner which is damped in terms of torsional vibrations with respect to the output disc (6).

4. Torque transmission device (1) according to Claim 3, **characterized in that** the output disc (6) has at least one second cooling opening (10) which is preferably configured as a centrally arranged through hole and/or the at least one second cooling opening (10) adjoins the at least one first cooling opening (9) of the drive disc (4) in the axial direction.

5. Torque transmission device (1) according to one of Claims 1 to 4, **characterized in that** the cooling fluid can be introduced through a central inlet opening (17) in the housing cover (7) into the interior of the friction clutch (3).

6. Torque transmission device (1) according to one of Claims 1 to 5, **characterized in that** the at least one cooling fluid deflecting section (8) has a deflecting cap (25) which is configured separately from the drive disc (4) and which diverts the cooling fluid.

7. Torque transmission device (1) according to one of Claims 1 to 6, **characterized in that** the at least one cooling fluid deflecting section (8) is configured and arranged in such a way that the cooling fluid can be guided past between a rear wall (27) of an internal combustion engine and a spacer (26) of the internal combustion engine.

## Revendications

1. Dispositif de transmission de couple de rotation (1) pour une chaîne cinématique d'un véhicule automobile, avec une unité de compensation (2) contrecarrant les vibrations de torsion ainsi qu'un embrayage à friction (3), un disque d'entraînement en entrée (4) de l'unité de compensation (2) pouvant être relié solidairement en rotation avec un arbre d'entraînement en entrée (5) d'un moteur à combustion interne et étant couplé solidairement en rotation avec un cache de carter (7) de l'embrayage à friction (3) et au moins une section de déviation de fluide de refroidissement (8) étant prévue, cette section amenant, dans un état de fonctionnement dans lequel l'unité de compensation (2) tourne sous la forme d'une unité d'amortissement, un fluide de refroidissement depuis l'environnement de l'embrayage à friction (3) jusque dans l'intérieur de l'embrayage à friction (3), le disque d'entraînement en entrée (4) comportant au moins une première ouverture de refroidissement (9) formant une section de déviation de fluide de refroidissement, cette au moins une première ouverture de refroidissement (9) étant disposée et réalisée de telle sorte qu'un courant de fluide de refroidissement puisse être introduit dans l'état de fonctionnement dans la direction axiale, à travers l'unité de compensation (2) et le cache de carter (7), jusque dans l'intérieur de l'embrayage à friction (3) et une roue de ventilateur (28) comportant plusieurs pales de déviation (30) étant disposée dans le chemin d'écoulement du fluide de refroidissement, **caractérisé en ce que** la roue de ventilateur (28) est reliée fixement à une tige d'actionnement (19) disposée centralement et actionnant un palier d'actionnement (14) de l'embrayage à friction (3), le cache de carter (7) tournant par rapport à la tige d'actionnement (19) dans l'état de fonctionnement.

2. Dispositif de transmission de couple de rotation (1) selon la revendication 1, **caractérisé en ce que** l'au moins une première ouverture de refroidissement (9) est réalisée à travers un trou traversant traversant le disque d'entraînement en entrée (4)- dans la direction axiale et/ou l'au moins une première ouverture de refroidissement (9) étant configurée de telle sorte qu'elle forme au niveau de sa bordure l'au moins une section de déviation de fluide de refroidissement (8) transportant le fluide sous pression dans l'état de fonctionnement dans la direction axiale en direction du cache de carter (7).

3. Dispositif de transmission de couple de rotation (1) selon l'une quelconque des revendications 1 et 2, **caractérisé en ce que** l'unité de compensation (2) est réalisée sous la forme d'une unité d'amortissement, par exemple sous la forme d'un volant à deux masses, le disque d'entraînement en entrée (4) étant couplé solidairement en rotation au cache de carter (7) via un disque d'entraînement en sortie (6) de l'unité de compensation (2) et le disque d'entraînement en entrée (4) étant disposé de façon à amortir les vibrations de torsion par rapport au disque d'entraînement en sortie (6) .

4. Dispositif de transmission de couple de rotation (1) selon la revendication 3, **caractérisé en ce que** le disque d'entraînement en sortie (6) comporte au moins une deuxième ouverture de refroidissement (10) réalisée de préférence sous la forme d'un trou traversant disposé de façon centrée et/ou l'au moins une deuxième ouverture de refroidissement (10) étant raccordée dans la direction axiale au niveau de l'au moins une première ouverture de refroidissement (9) du disque d'entraînement en entrée (4).

5. Dispositif de transmission de couple de rotation (1) selon l'une quelconque des revendications 1 à 4, **caractérisé en ce que** le fluide de refroidissement peut être introduit à travers une ouverture d'admission (17) centrale dans le cache de carter (7), dans l'intérieur de l'embrayage à friction (3).

6. Dispositif de transmission de couple de rotation (1) selon l'une quelconque des revendications 1 à 5, **caractérisé en ce que** l'au moins une section de déviation de fluide de refroidissement (8) comporte un bouchon de déviation (25) réalisé séparément du disque d'entraînement en entrée (4), ce bouchon déviant le fluide de refroidissement.

7. Dispositif de transmission de couple de rotation (1) selon l'une quelconque des revendications 1 à 6, **caractérisé en ce que** l'au moins une section de déviation de fluide de refroidissement (8) est configurée et disposée de telle sorte que le fluide de refroidissement puisse avancer entre une paroi arrière (27) d'un moteur à combustion interne et une entretoise (26) du moteur à combustion interne.
